# EUROPÄISCHE PATENTSCHRIFT

(11) **EP 0 693 811 B1**
(45) Veröffentlichungstag und Bekanntmachung des Hinweises auf die Patenterteilung: **22.10.1997**
(21) Anmeldenummer: 95110601.2
(22) Anmeldetag: 07.07.1995
(51) Int. Cl.: H02G 3/06, H01R 17/12

(54) **Einrichtung zur Richtungsänderung eines Schutzschlauchsystems**
Direction changing device for protective tubing system
Dispositif de changement de direction pour un système de tuyau de protection

(30) Priorität: 21.07.1994 DE 4425867
(43) Veröffentlichungstag der Anmeldung: 24.01.1996
(73) Patentinhaber: Daimler-Benz Aerospace Airbus Gesellschaft mit beschränkter Haftung, 21129 Hamburg (DE)
(72) Erfinder: Kirma, Safa, D-22880 Wedel (DE)
(74) Vertreter: Hansmann, Dierk, Dipl.-Ing.

(56) Entgegenhaltungen:
- EP-A- 0 396 927
- EP-A- 0 397 063
- DE-A- 3 210 254
- DE-A- 3 242 073
- GB-A- 879 865

## Beschreibung

Die Erfindung bezieht sich auf eine Einrichtung zur Richtungsänderung eines Schutzschlauchsystems in einem Flugzeug. Sie ist zur Verlegung beliebiger Schutzschlauchsysteme mit biegesteifem Endzustand geeignet.

Anschlüsse und Verbindungen von Leitungen sind so auszuführen, daß sie allgemein den möglichen Beanspruchungen mechanischer, thermischer, elektrischer und chemischer Art standhalten. Deshalb werden elektrische Leitungsverbindungen im Flugzeug an bestimmten Stellen in metallenen Schutzschläuchen verlegt, um sie gegen äußere mechanische Einwirkungen oder elektromagnetische Störungen, insbesondere Überspannungen durch Blitzeinwirkungen, zu schützen. In Flugzeugen werden derartige Schutzschlauchanschlüsse, die an eine große Anzahl dicht beieinander liegender elektrisch betriebener Geräte oder -gruppen mit sehr unterschiedlichen gespeisten Nutzsignalen und Störempfindlichkeiten anzuschließen sind, verlegt. Diese bekannten Leitungsführungen kann man nicht auf engstem Raum und mit variabelen Richtungsänderungen an elektrische und / oder mechanische Anschlußkomponenten im Flugzeuginnenraum verlegen. Die vertraute Verlegung von gebündelten Leitungen mit Anschlußelementen, die zusätzlich von einem kunststoffartigen Schlauch als Scheuerschutz umgeben sind, der die Leitungen gegen äußere mechanischer Einwirkungen schützt, in einem diese Anordnung umgebenden leitfähigen Schutzschlauch gestattet keine bleibenden biegesteifen Richtungsänderungen auf engstem Raum.

Ein bekanntes Anschlußelement nach der DE-PS 39 14 930 besteht aus einem Steckverbinder gerader Ausführung, an dessen Gehäuseendbereich ein metallener Wellschlauch als Abschirmschlauch fixiert wird, wobei die Richtungsänderung zum Steckverbinder mittels zweier Halbschalen nur rechtwinklig und steif erfolgt. Dieses Anschlußelement gestattet keine Verlegung isolierten elektrischen Leitungen mit biegesteifem Richtungsänderungsanteil an eine elektrische Komponente im Flugzeug. Das Erreichen des biegesteifen Anteiles erfolgt bei dieser Lösung mit Hilfe zusätzlicher Halbschalen, die nur für einen definierten Winkel (nur mit 90 Grad Krümmer) an eine elektrische Komponente vorgesehen sind.

Eine weitere Lösung nach der DE 25 03 471 bezieht sich auf eine Kupplungsart für einen Leitungsschlauch, der auf der Hülsenverlängerung, die an einer Sechskantmutter koaxial fest angesetzt ist, mittels einer losen Überwurfmutter verschraubt wird. Eine Buchsenverstopfung, die sich der Innenwandung der Überwurfmutter anpaßt und den Leitungschlauch (die flexiblen Leitungen) zusätzlich umhüllt, unterstützt die Fixierung des Leitungsschlauches auf der genannten Hülsenverlängerung.
Diese Anordnung realisiert keine bleibende mechanische biegesteife Richtungsänderung eines Schutzschlauchsystems. Da es sich um die Fixierung flexibler Leitungen an einem Endkörper handelt, kann diese Anordnung nicht zur Richtungsänderung eines Schutzschlauchsystems im Flugzeug eingesetzt werden. Außerdem handelt es sich bei dem eingesetzte Schlauch um keinen richtungsveränderlichen Schlauch, der - als Metall-Wellschlauch ausgeführt - seinen biegesteifen Endzustand nach Abschluß des mechanischen Biegevorganges beibehält. Mit dieser Lösung ist die bleibende Richtungsänderung eines Schutzschlauchsystems nicht realisierbar, da der Schlauch flexibel ausgeführt ist und die Anordnung auch keine weiteren Hilfsmittel zur Richtungsänderung aufweist.

Demgemäß liegt der Erfindung die Aufgabe zugrunde eine gattungsgemäße Einrichtung derart zu verbessern, daß mit ihr die Fixierung eines beliebigen Schutzschlauchsystemes an einem Verbindungselement im Flugzeug erfolgen kann. Ein ihr mit integrierter Richtungsschlauch, der einen biegesteifen Endzustand nach Abschluß des mechanischen Biegevorganges realisiert, soll nicht Bestandteil des Schutzschlauchsystems sein. Er dient nur als Hilfsmittel zur mechanischen Richtungsänderung.

Diese Aufgabe wird bei einer gattungsgemäßen Anordnung durch die Merkmale der Ansprüche 1 und 7 gelöst.

Vorteilhafte Weiterbildung der Erfindung sind in den Ansprüchen 2 bis 6 und 8 angegeben.

Die durch die Erfindung erreichten Vorteile bestehen darin, daß eine formschlüssige Anpassung des Richtungsschlauches 25 mit seinen beschriebenen Eigenschaften an die Einrichtung erreicht wird. Infolge der Geometrie des Richtungsschlauches 25 erfolgt seine räumliche und formschlüssige Anpassung an die Einrichtung. Mit dem freien Belassen des nicht fixierten freien Endes des Richtungsschlauches 25 wird erreicht, daß die Einrichtung für jedes beliebige Schutzschlauchsystem, das man biegesteif verlegt, genutzt werden kann. Dabei bleibt der mechanisch realisierte Biegezustand bei einer Richtungsänderung des Richtungsschlauches 25 erhalten, der sich nur durch eine weitere mechanische Biegung aus dieser Position in einen anderen Endzustand verändern läßt. Diese Biegung wird sich während des Flugbetriebes, - auch unter von außen auf den Richtungsschlauch 25 möglicherweise einwirkenden mechanischen Belastungen, wie Erschütterungen, Vibrationen oder anderen übertragenen Belastungen -, nicht verändern. Unabhängig vom installierten Schutzschlauchsystem kann man nachträglich ohne größeren Aufwand und bei bestehender Notwendigkeit weitere Richtungsschläuche im Schutzschlauchsystem integrieren. Der wesentliche Vorteil besteht darin, daß sich die Einrichtung mit integriertem Richtungsschlauch 25 zur Verlegung beliebiger Schutzschlauchsysteme im Flugzeug eignet, wobei der Richtungsschlauch 25 kein Bestandteil des Schutzschlauchsystems ist. Er dient als Hilfsmittel zur mechanischen Änderung der Verlegerichtung im Flugzeuginneren.

Die Erfindung ist anhand der Zeichnungen dargestellt und in einem Ausführungsbeispiel näher beschrieben. Es zeigen:
- Fig.1: die erfindungsgemäße Einrichtung mit einem Schutzschlauchsystem und dessen Anschluß an ein Verbindungselement;
- Fig.2: die vergrößerte Einzelheit nach Fig.1;
- Fig.3: die modifizierte Anordnung nach Fig.2.

Die Erfindung soll an zwei Ausführungsbeispielen näher erläutert werden.

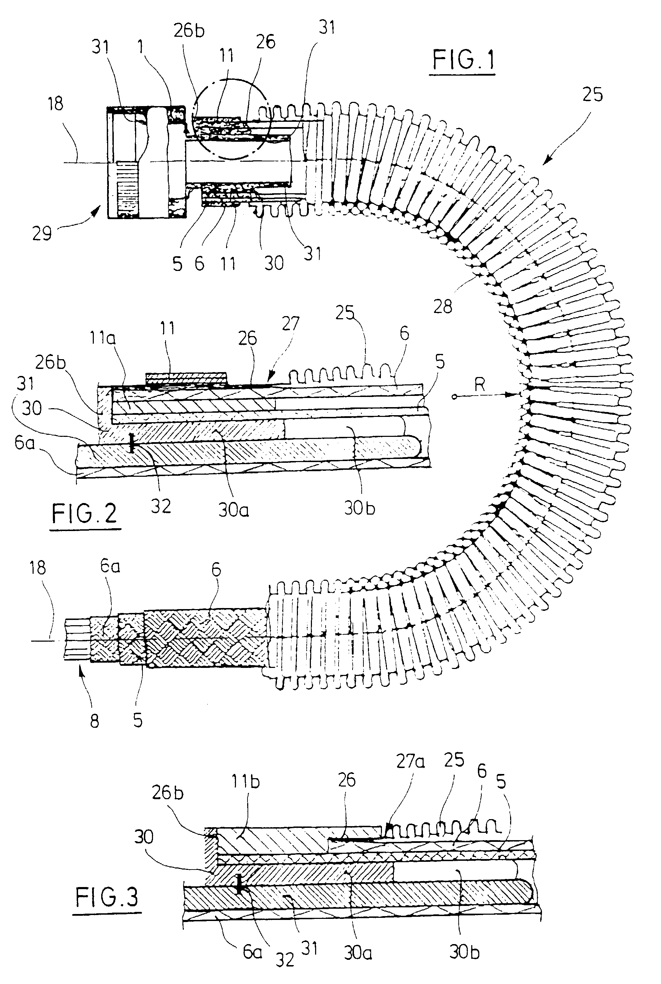

Die Erläuterung des ersten Ausführungsbeispieles geschieht anhand der beiden Ausführungsformen nach den Figuren 1 und 2.

In der Fig.1 ist die Einrichtung in ihrem grundsätzlichen Aufbau dargestellt. Danach besteht die Einrichtung aus einem Verbindungselement 29 und einem Richtungsschlauch 25, der einen biegesteifen Endzustand einnimmt und sich als Rohrkrümmer im Winkel von 180 Grad darstellt. Letzterer dient als mechanisches Hilfsmittel zur richtungsveränderlichen Verlegung eines von ihm aufgenommenen Schutzschlauchsystems, der als Metall - Wellschlauch ausgeführt einen biegesteifen Endzustand in einem definierten Anwendungswinkel realisiert. Das Verbindungselement 29, das beispielsgemäß als Steckerendgehäuse ausgeführt ist, besteht aus einem hohlzylindrischen Aufschraubteil 1, beispielsweise einer Überwurfmutter, und einem Stützkörper 31, die koaxial angeordnet sind. Der Stützkörper 31 weist eine Formänderung auf. Er besitzt beispielgemäß die Form eines abgestuften zylindrischen Hohlkörpers, dessen erweiterter Teil (mit dem größeren Manteldurchmesser) mit dem Aufschraubteiles 1 über einen separaten Sprengring unverlierbar mit diesem verbunden ist. Dabei sind das Aufschraubteil 1 und der erweiterte Teil des Stützkörpers 31 drehbeweglich zueinander gelagert. Der separate Sprengring liegt in einer eingelassenen vertikalen Nut, die sich aus zwei deckungsgleich zueinander liegenden Nuten in den axial geschlossenen Bereichen der beiden Körperwandungen ergibt.

Das hohlzylindrische Aufschraubteil 1 (als Überwurfmutter) besitzt ein Innengewinde, mit dem das Gehäuse eines (nicht gezeigten) elektrischen Steckers verschraubt wird. Befindet sich der Stecker mit dem Aufschraubteil 1 im verschraubten Zustand, so wird der Stützkörper 31 mit diesem Stecker durch Verzahnung fixiert. Mit dem Stecker sind elektrisch isolierte Leitungen 8 verbunden, die durch den Hohlraumquerschnitt des Stützkörpers 31 geführt werden, welche die isolierten Kontaktelemente des Steckers belegen. Der Stecker, der als Buchsen- oder Stiftstecker ausgeführt ist, stellt einen Bestandteil der (figurlich nicht dargestellten) Steckverbindung mit einem (nicht gezeigten) anderen Stecker dar, an den weitere elektrisch isolierte Leitungen angeschlossen sind.

Auf dem verjüngten Teil des Stützkörpers 31 (mit dem kleineren Manteldurchmesser) lagert eine metallene Buchse 30, wobei ein Sprengring 32 beide Körper unverlierbar miteinander verbindet und beide Körper drehbeweglich zueinander fixiert. Die Buchse 30 besteht aus zwei miteinander verbundenen Zonen 30a, 30b (abgegrenzte Gebiete), einer axial geschlossen Zone 30a und einer axial geschlitzten Zone 30b.
Die geschlitzte Zone 30b setzt sich aus mehreren flexiblen Elementen zusammen, die als Kontaktfedern ausgebildet sind, welche unter mechanischem Druck auf die Mantelaußenfläche des Stützkörpers 31 drücken und durch letzteren abgestützt werden. Dadurch wird zwischen der Buchse 30 und dem Stützkörper 31 eine elektrisch leitende Verbindung realisiert. Der Sprengring 32 liegt auch - wie vorbeschrieben - in einer eingelassenen Nut, die sich aus zwei deckungsgleich zueinander liegenden Nuten , welche in den axial geschlossenen Bereich der Buchse 30 und in die Mantelaußenfläche des verjüngten Teiles des Stützkörpers 31 eingearbeitet sind, ergibt. Er verbindet auch die Buchse 30 und den Stützkörper 31 leitend miteinander. Um einen ausreichend dimensionierten Querschnitt zur Stromableitung zu erreichen, liegen die Kontaktfedern koaxial (dicht nebeneinander liegend) verteilt auf der Mantelaußenfläche des Stützkörpers 31 an. Sie üben selbst die notwendige Drucklast zur ausreichenden Kontaktierung mit dem Stützkörper 31 aus.
Am freien Ende der axial geschlossenen Zone 30a ist der Buchse 30 ein Flansch 26b fest angesetzt, der sich der Formveränderung des Stützkörpers 31 zuwendet.

Die Buchse 30 wird von einem elektrisch leitfähigen Schlauch 5 umhüllt, den man als Kupfergeflecht ausführt. Dieses Kupfergeflecht ist von einem als Kunststoffgeflecht ausgeführten elektrisch nicht leitfähigen Schlauch 6 als Scheuerschutz koaxial umgeben.
Der Richtungsschlauch 25 besitzt beispielgemäß ein glatt geformtes Anschlußende 26, das auch glatt und teilweise geschlitzt geformt ausgeführt sein kann. Es wendet sich der Formveränderung des Stützkörpers 31 zu und besitzt die Form einer beispielgemäßen glatten Buchse 27, welche den elektrisch nicht leitfähigen Schlauch 6 koaxial umgibt. Die Buchse 27 kann auch - wie vorgenannt - eine glatte und teilweise geschlitzte Form besitzen.
Beispielgemäß wird das Kupfergeflecht, das Kunststoffgeflecht und das glatte Anschlußende 26 des Richtungsschlauches 25 bis an die rückseitige Stirnfläche des Flansches 26b geführt.

Es wird ergänzt, daß sich ein weiterer kunststoffartiger Schlauch 6a unterhalb der Mantelinnenfläche des Stützkörpers 31 befindet. Er umhüllt zusätzlich die isolierten elektrischen Leitungen 8 und schützt letztere gegen Scheuerwirkung.
Ein Spannelement 11, das man beispielgemäß als Spannband ausgeführt, fixiert mittels einem (nicht gezeigten) Spannschloß den elektrisch nicht leitfähigen Schlauch 6 und das glatte Anschlußende 26 des Richtungsschlauches 25 im Bereich der axial geschlossenen Zone 30a fest auf der Quetschhülse 11a, wobei letztere den elektrisch leitfähigen Schlauch 5 auf der Buchse 30 befestigt. Infolge der drehbeweglichen Anordnung der Buchse 30 gegenüber dem verjüngten Teil des Stützkörpers 31 erfolgt zusätzlich eine räumliche und formschlüssige Anpassung des Richtungsschlauches 25 an die Einrichtung.
Im weiteren werden zwei weitere Ausführungsformen angegeben, die - figurlich nicht dargestellt - sich alternativ der Ausführungform nach der Fig.1 ergeben. Ihr Unterschied besteht darin, daß sich das Schlauchsystem inclusive das glatte oder glatte und teilweise geschlitzt geformte Anschlußende 26 des Richtungsschlauches 25 als glatte oder glatte und teilweise geschlitzte Buchse 27 in der nach Fig.1 vorbeschriebenen Art direkt mittels dem Spannband 11 auf dem verjüngten Teil des Stützkörpers 31 befestigen läßt. Dabei kann zusätzlich die metallenen Quetschhülse 11a zwischen den beiden Schläuchen 5, 6 (Kupfer- und Kunststoffgeflecht) angeordnet sein.

Dieses Schlauchsystem mit dem Anschlußende 26 des Richtungsschlauches 25 läßt sich günstigerweise auch auf der metallenen Buchse 30 in der nach Fig.1 vorbeschriebenen Art - aber ohne zusätzliche Fixierung der Buchse 30 gegenüber dem Stützkörper 31 mittels dem Sprengring 32 - realisieren. Bei diesen beiden alternativen Ausführungsformen wird - auch infolge der aufgehobenen Drehbeweglichkeit der Einrichtung - nicht die gewünschte Richtungsänderung des Schutzschlauchsystems durch die Einrichtung eingeschränkt. Mittels der fest auf dem verjüngten Teil des Stützkörpers 31 fixierte Elemente bleibt die Verlegung des Richtungsschlauches 25 in einen biegesteifen Endzustand erhalten, der sich außerdem in zwei- oder dreidimensionaler Richtung auf engstem Raum verändern läßt.

Es wird erwähnt, daß das Aufschraubteil 1 (Überwurfmutter), der Stützkörper 31, die beiden Sprengringe, die zonal aufgeteilte Buchse 30, das Gehäuse des (nicht gezeigten) elektrischen Steckers, der Richtungsschlauch 25 (biegesteifer Wellschlauch) und das Spannband 11 metallen ausgeführt sind, da sie stromleitungsmäßig (mit Ausnahme des Richtungsschlauches 25) in die Schutzmaßnahme zum Schutz elektrischer Anlagen in Flugzeugen gegen elektromagnetische Störungen, insbesondere Überspannungen durch Blitzeinwirkungen, einbezogen werden. Der Richtungsschlauch 25 kann ebenfalls integraler Bestandteil dieses elektrotechnischen Schutzes sein, sofern das auf der Buchse 30 nicht fixierte freie Ende mit dem Potentialausgleich des Flugzeuges in Verbindung steht.
Beispielgemäß wird dieses freie Ende des Richtungsschlauches 25 aber frei belassen, weshalb die Anordnung für jedes beliebige Schutzschlauchsystem, das man biegesteif verlegt, genutzt werden kann.

Der Richtungsschlauch 25 als Teil der Anordnung ist definitiv ein zur richtungsgebenden Führung angeordneter Schutzschlauch. Er wird biegesteif als Metall - Wellschlauch auf engstem Raum zwischen den dicht beieinander liegenden elektrisch betriebenen Geräten oder - Gerätegruppen eines Flugzeuges verlegt. Unter seinem biegesteifen Endzustand wird verstanden, daß der mechanisch realisierte Biegezustand bei einer Richtungsänderung des Richtungsschlauches 25, beispielsweise durch dessen Krümmung in einen Anwendungswinkel bis zu 360 Grad, erhalten bleibt.

Diese Krümmung soll sich während des Flugbetriebes - auch unter von außen auf den Richtungsschlauch 25 möglicherweise einwirkenden mechanischen Belastungen, wie Erschütterungen, Vibrationen oder anderen übertragenen Belastungen, nicht verändern. Das bedeutet, daß sich der Richtungsschlauch 25 nach seiner Verlegung in einem biegesteifen Endzustand befindet, der sich - als integraler Bestandteil der Anordnung - nur durch eine weitere mechanische Biegung aus dieser Position in einen anderen Endzustand verändern läßt. Der Richtungsschlauch 25 besitzt eine mechanische Funktion, die durch die vorgenannte Richtungsänderung charakterisiert ist. Ihn kann man so biegen, wie es seine Installation im Flugzeuginnenraum, beispielsweise in zwei- oder dreidimensionaler Richtung, erfordert, wobei er seinen Endzustand (nach Abschluß des Biegevorganges) beibehält. Bei Wegfall des Richtungsschlauches 25 wird die Funktion des Blitz- und Abschirmschutzes der Einrichtung nicht beeinträchtigt, da der elektrisch leitfähige Schlauch 5 (Kupfergeflecht) auf der metallene Buchse 30 mit der metallenen Quetschhülse 11a befestigt und damit mit dem Stützkörper 31 leitfähig verbunden ist. Somit würde die elektrotechnische Schutzmaßnahme des verbleibenden Teiles der Anordnung (ohne den Richtungsschlauch 25) noch funktionsfähig sein. Deshalb kann mit der beispielgemäßen Lösung die Anordnung zur Integration in jedes beliebige Schutzschlauchsystems in Luftfahrzeugen benutzt werden, weil auch das andere (nicht am Stützkörper 31 angeschlossenen) Ende des Richtungsschlauches 25 frei gestaltbar (unberührt belassen) ist (bleibt). Infolge der drehbeweglichen Anordnung der Buchse 30 gegenüber dem verjüngten Teil des Stützkörpers 31 erfolgt eine zusätzliche räumliche und formschlüssige Anpassung des Richtungsschlauches 25 an die Einrichtung. Der Richtungsschlauch 25 selbst läßt sich als Wendelwellschlauch oder Ringwellschlauch ausgeführt verlegen. Er läßt sich in Richtung einer Mittelachse 18 des Stützkörpers 31 gerade oder in Richtung der im Radius R gekrümmten Mittelachse 18 mechanisch in einen bevorzugten Anwendungswinkel verformen, so daß er in seinem biegesteifen Endzustand in einer Rundung 28 verbleibt. Mit ihm lassen sich verschiedene Anwendungswinkel, die einen Rohrkrümmer bilden und im Winkelbereich zwischen 0 Grad und 360 Grad liegen, realisieren. Dabei kann man ihn ebenso zwei oder dreidimensional verformen.

Das Verbindungselement 29 kann beispielsweise so ausgebildet sein, daß an den verjüngten Teil des Stützkörpers 31 ein Endgehäuse mit gerader und winkliger Ausführung oder ein Abzweiger (verschiedener Art), vorzugsweise für T-, Kreuz- oder winkligen Abzweiger, oder eine Durchführung oder ein Endstück oder ein Kupplungsstück angeformt wird.

Die Einrichtung nach der Fig.2 zeigt eine vergrößerte Einzelheit Z des Anschlusses nach der Fig.1 innerhalb des Bereiches der Fixierung der verschiedenen Schläuche (Schutzschlauchsystem) einschließlich des Richtungsschlauches 25 auf der metallenen Quetschhülse 11a. Nach der Einrichtung befindet sich zwischen dem als Kupfergeflecht ausgeführten elektrisch leitfähigen Schutzschlauch 5 und dem als Kunststoffgeflecht ausgeführten elektrisch nicht leitfähigen Schlauch 6 die metallene Quetschhülse 11a. Diese Quetschhülse 11a befestigt das Kupfergeflecht auf der Buchse 30. Letztere weist zwei miteinander verbundene Bereiche, einen geschlossenen und einen geschlitzten Bereich auf. Das Kupfergeflecht umhüllt koaxial die Buchse 30 und wird mit ihrem geschlossenen Bereich bis an die rückseitige Stirnfläche des Flansches 26b geführt. Die Fixierung dieses Teiles der Einrichtung auf der axial geschlossenen Zone 30a der Hülse 30 - mit der zusätzlich angeordneten Quetschhülse 11a - erfolgt nach der in Fig.1 beschriebenen Ausführung.

Die Erläuterung des zweiten Ausführungsbeispieles erfolgt anhand der Darstellung nach Fig.3, welche der Ausführungsform nach der Fig.1 ähnlich erscheint. Der Unterschied zur Lösung nach der Fig.1 besteht darin, daß der elektrisch nicht leitfähige Schlauch 6 als Kunststoffschlauch und das glatte oder glatte und teilweise geschlitzte Anschlußende 26 des Richtungsschlauches 25 in einem definierten Abstand zur rückseitigen Stirnfläche des Flansches 26b im Bereich der axial geschlossenen Zone 30a oberhalb des elektrisch leitfähigen Schlauches 5 als Kupfergeflecht angeordnet sind. Das eine Anschlußende 26 des Richtungsschlauches 25 ist dabei so geformt, daß es die Form einer glatten oder glatten und teilweise geschlitzten Buchse 27a besitzt, welche das genannte Kunststoffgeflecht und Kupfergeflecht koaxial umhüllt. Im Unterschied zur Befestigung des Schlauchsystems mittels Spannband 11 erfolgt nach dieser beispielgemäßen Lösung die Fixierung der einzelnen Schlauchkomponenten auf der genannten Buchse 30 mittels einer weiteren Quetschhülse 11b durch deren Quetschung. Die weitere Quetschhülse 11b, die bis an die rückseitige Stirnfläche des Flansches 26b geführt ist und den elektrisch leitfähigen Schlauch 5 sowie das Anschlußende 26 des Richtungsschlauches 25 koaxial umhüllt, wird durch Quetschung das Kupfergeflecht und das Kunststoffgeflecht als auch das Anschlußende 26 des Richtungsschlauches 25 im Bereich der axial geschlossenen Zone 30a fest auf der Buchse 30 fixiert. Infolge der drehbeweglichen Anordnung der Buchse 30 gegenüber dem verjüngten Teil des Stützkörpers 31 wird zusätzlich eine räumliche und formschlüssige Anpassung des Richtungsschlauches 25 an die Anordnung erfolgen.

### Bezugszeichen

- 1: Aufschraubteil, hohlzylindrisch, metallen; Überwurfmutter
- 5: Schlauch, geflechtartig, elektrisch leitfähig; Kupfergeflecht
- 6, 6a: Schlauch, geflechtartig, kunststoffartig, elektrisch nicht leitfähig; Kunststoffgeflecht
- 8: Leitung, isoliert, elektrisch leitfähig
- 11: Spannelement; metallen; Spannband
- 11a, 11b: Quetschhülse, metallen
- 18: Mittelachse
- 25: Richtungsschlauch, metallen, biegesteif; Wellschlauch
- 26: Anschlußende, glatt
- 26b: Flansch
- 27, 27a: Buchse, glatt
- 28: Rundung
- 29: Verbindungselement; Steckerendgehäuse
- 30: Buchse, metallen
- 30a: Zone, axial geschlossen
- 30b: Zone, axial geschlitzt
- 31: Stützkörper; Hohlkörper, zylindrisch, abgestuft, metallen
- 32: Sprengring, metallen
- R: Radius

## Patentansprüche

1. Einrichtung zur Richtungsänderung eines Schutzschlauchsystems zur Aufnahme von elektrischen Leitungen in Luftfahrzeugen, mit folgenden Merkmalen:
- sie besteht aus einem Verbindungselement (29), einem aus mehreren Schläuchen zusammengesetzten Schutzschlauchsystem, dem ein elektrisch leitfähiger Schlauch (5) und ein elektrisch nicht leitfähiger Schlauch (6) zugeordnet ist, einem Richtungsschlauch (25) und einem Spannelement (11), wobei der Richtungsschlauch (25) als mechanisches Hilfsmittel zur richtungsveränderlichen Verlegung des von ihm aufgenommenen Schutzschlauchsystems dient, der als Metall - Wellschlauch einen biegesteifen Endzustand realisiert,
- das Verbindungselement (29) besteht aus einem hohlzylindrischen Aufschraubteil (1) und einem hohlzylindrischen Stützkörper (31), die koaxial angeordnet sind,
**dadurch gekennzeichnet**, daß
- der Stützkörper (31) eine Formveränderung aufweist, welche eine definierte Abstufung darstellt, die mit seinem erweiterten Körperteil mit größerem Manteldurchmesser und mit seinem verjüngten Körperteil mit kleinerem Manteldurchmesser einstückig verbunden ist,
- der als Metallgeflecht ausgeführte elektrisch leitfähige Schlauch (5) den verjüngten Teil des Stützkörpers (31) umhüllt, welcher von einem als Kunststoffgeflecht ausgeführten elektrisch nicht leitfähigen Schlauch (6) koaxial umgeben ist,
- ein Anschlußende (26) des Richtungsschlauches (25) glatt oder glatt und teilweise geschlitzt geformt ist, so daß es die Form einer glatten oder glatten und teilweise geschlitzten Buchse (27) besitzt, welches den elektrisch nicht leitfähigen Schlauch (6) koaxial umgibt,
- der elektrisch leitfähige und der elektrisch nicht leitfähigen Schlauch (5, 6) und das eine Anschlußende (26) des Richtungsschlauches (25) durch das Spannelement (11), vorzugsweise Spannband mittels einem Spannschloß, fest auf dem verjüngten Teil des Stützkörpers (31) fixiert sind.

2. Einrichtung nach Anspruch 1, **dadurch gekennzeichnet**, daß auf dem verjüngten Teil des Stützkörpers (31) eine metallene Buchse (30) koaxial angeordnet ist, die aus zwei miteinander verbundenen Zonen (30a, 30b), einer axial geschlossen Zone (30a) und einer axial geschlitzten Zone (30b) besteht, wobei sich letztere Zone aus flexiblen Elementen, die als Kontaktfedern ausgebildet sind, zusammensetzt, welche unter mechanischem Druck den Stützkörper (31) und die Buchse (30) elektrisch leitend verbinden, und daß am freien Ende der axial geschlossenen Zone (30a) der Buchse (30) ein der Formveränderung des Stützkörpers (31) sich zuwendender Flansch (26b) fest angesetzt ist, bis an dessen rückseitige Stirnfläche der elektrisch leitfähige und der elektrisch nicht leitfähigen Schlauch (5, 6) und das eine Anschlußende (26) des Richtungsschlauches (25), welche die Buchse (30) koaxial umhüllen, geführt und durch das Spannelement (11) fixiert sind.

3. Einrichtung nach Anspruch 2, **dadurch gekennzeichnet**, daß die Buchse (30) drehbeweglich auf dem verjüngten Teil des Stützkörpers (31) lagert, wobei ein Sprengring (32) beide Körper zueinander fixiert.

4. Einrichtung nach Anspruch 2, **dadurch gekennzeichnet**, daß der elektrisch leitfähige und der elektrisch nicht leitfähigen Schlauch (5, 6) und das eine Anschlußende (26) des Richtungsschlauches (25) bis an die rückseitige Stirnfläche des Flansches (26b) geführt sind.

5. Einrichtung nach den Ansprüchen 1 oder 2,
**dadurch gekennzeichnet**, daß zwischen dem elektrisch leitfähigen und dem elektrisch nicht leitfähigen Schlauch (5, 6) eine zusätzliche Quetschhülse (11a) angeordnet ist, die zwei miteinander verbundene Bereiche, einen geschlossenen und einen geschlitzten Bereich, aufweist, welche den elektrisch leitfähigen Schlauch (5) koaxial umhüllt.

6. Einrichtung nach Anspruch 5, **dadurch gekennzeichnet**, daß die zusätzliche Quetschhülse (11a) mit ihrem geschlossenen Bereich bis an die rückseitige Stirnfläche des Flansches (26b) geführt ist.

7. Einrichtung zur Richtungsänderung eines Schutzschlauchsystems zur Aufnahme von elektrischen Leitungen in Luftfahrzeugen, mit folgenden Merkmalen:
- sie besteht aus einem Verbindungselement (29), einem aus mehreren Schläuchen zusammengesetzten Schutzschlauchsystem, dem ein elektrisch leitfähiger Schlauch (5) und ein elektrisch nicht leitfähiger Schlauch (6) zugeordnet ist, einem Richtungsschlauch (25), einer metallenen Buchse (30) und einem Spannelement (11), wobei der Richtungsschlauch (25) als mechanisches Hilfsmittel zur richtungsveränderlichen Verlegung des von ihm aufgenommenen Schutzschlauchsystems dient, der als Metall - Wellschlauch einen biegesteifen Endzustand realisiert,
- das Verbindungselement (29) besteht aus einem hohlzylindrischen Aufschraubteil (1) und einem hohlzylindrischen Stützkörper (31), die koaxial angeordnet sind,
**dadurch gekennzeichnet,** daß
- der Stützkörper (31) eine Formveränderung aufweist, welche eine definierte Abstufung darstellt, die mit seinem erweiterter Körperteil mit größerem Manteldurchmesser und mit seinem verjüngten Körperteil mit kleinerem Manteldurchmesser einstückig verbunden ist,
- ein Anschlußende (26) des Richtungsschlauches (25) glatt oder glatt und teilweise geschlitzt geformt ist, so daß es die Form einer glatten oder glatten und teilweise geschlitzten Buchse (27a) besitzt, welches den elektrisch nicht leitfähigen Schlauch (6) koaxial umgibt,
- die Buchse (30) auf dem verjüngten Teil des Stützkörpers (31) koaxial angeordnet ist, die aus zwei miteinander verbundenen Zonen (30a, 30b), einer axial geschlossen Zone (30a) und einer axial geschlitzten Zone (30b) besteht, wobei sich letztere Zone aus flexiblen Elementen, die als Kontaktfedern ausgebildet sind, zusammensetzt, welche unter mechanischem Druck den Stützkörper (31) und die Buchse (30) elektrisch leitend verbinden, und daß am freien Ende der axial geschlossenen Zone (30a) der Buchse (30) ein der Formveränderung des Stützkörpers (31) sich zuwendender Flansch (26b) fest angesetzt ist, bis an dessen rückseitige Stirnfläche der elektrisch leitfähige Schlauch (5), welcher die Buchse (30) koaxial umhüllt, geführt ist,
- der elektrisch nicht leitfähige Schlauch (6) und das eine Anschlußende (26) des Richtungsschlauches (25) in einem definierten Abstand zur rückseitigen Stirnfläche des Flansches (26b) im Bereich der axial geschlossenen Zone (30a) oberhalb des elektrisch leitfähigen Schlauches (5) angeordnet sind,
- ein als Quetschhülse ausgebildetes weiteres Spannelement (11b), das bis an die rückseitige Stirnfläche des Flansches (26b) geführt ist und den elektrisch leitfähigen Schlauch (5) sowie das glatte Anschlußende (26) des Richtungsschlauches (25) koaxial umhüllt, durch Quetschung den elektrisch leitfähigen und den elektrisch nicht leitfähigen Schlauch (5, 6) als auch das eine Anschlußende (26) des Richtungsschlauches (25) im Bereich der axial geschlossenen Zone (30a) fest auf der Buchse (30) fixiert,
- der als Metallgeflecht ausgeführte elektrisch leitfähige Schlauch (5) den verjüngten Teil des Stützkörpers (31) umhüllt, welcher von einem als Kunststoffgeflecht ausgeführten elektrisch nicht leitfähigen Schlauch (6) koaxial umgeben ist,
- der elektrisch leitfähige und der elektrisch nicht leitfähigen Schlauch (5, 6) und das glatte Anschlußende (26) des Richtungsschlauches (25) durch das Spannelement (11), vorzugsweise Spannband mittels einem Spannschloß, fest auf dem verjüngten Teil des Stützkörpers (31) fixiert sind.

8. Einrichtung nach Anspruch 7, **dadurch gekennzeichnet,** daß die Buchse (30) und der verjüngte Teil des Stützkörpers (31) durch einen Sprengring (32) fixiert sind, weshalb beide Körper unverlierbar miteinander verbunden und drehbeweglich zueinander lagern.

## Claims

1. Device for altering the direction of a protective tubing system for accommodating electric cables in aircraft, having the following features:
- it comprises a connecting element (29), a protective tubing system composed of a plurality of tubes and having an electrically conductive tube (5) and an electrically non-conductive tube (6) associated therewith, a directional tube (25) and a clamping element (11), the directional tube (25) being used as a mechanical aid for altering the direction of installation of the protective tubing system accommodated thereby, the directional tube in the form of a metal corrugated tube realizing a flexurally stiff finished state,
- the connecting element (29) comprises a hollow cylindrical screw-on part (1) and a hollow cylindrical supporting body (31), which are arranged coaxially,
characterized in that
- the supporting body (31) has a change of shape representing a defined graduation which is integrally connected to its widened body part having a greater shell diameter and to its tapered body part having a smaller shell diameter,
- the electrically conductive tube (5) designed as a metal braid encloses the tapered part of the supporting body (31), which is coaxially surrounded by an electrically non-conductive tube (6) designed as a plastic braid,
- a connection end (26) of the directional tube (25) is smooth or smooth and partially slotted so that it takes the form of a smooth or smooth and partially slotted bush (27) which coaxially surrounds the electrically non-conductive tube (6),
- the electrically conductive tube (5) and the electrically non-conductive tube (6) and the one connection end (26) of the directional tube (25) are fixed by means of the clamping element (11), preferably taut band by means of a turnbuckle, firmly on the tapered part of the supporting body (31).

2. Device according to claim 1, characterized in that disposed coaxially on the tapered part of the supporting body (31) is a metal bush (30) comprising two zones (30a, 30b) which are connected to one another, an axially closed zone (30a) and an axially slotted zone (30b), the latter zone being composed of flexible elements in the form of contact springs which, under mechanical pressure, connect the supporting body (31) and the bush (30) in an electrically conductive manner, and that firmly attached to the free end of the axially closed zone (30a) of the bush (30) is a flange (26b), which is directed towards the change of shape of the supporting body (31) and up to the rear end face of which the electrically conductive tube (5) and the electrically non-conductive tube (6) and the one connection end (26) of the directional tube (25) coaxially enclosing the bush (30) are conveyed and fixed by means of the clamping element (11).

3. Device according to claim 2, characterized in that the bush (30) is supported rotatably on the tapered part of the supporting body (31), a snap ring (32) fixing both bodies in position relative to one another.

4. Device according to claim 2, characterized in that the electrically conductive tube (5) and the electrically non-conductive tube (6) and the one connection end (26) of the directional tube (25) are conveyed up to the rear end face of the flange (26b).

5. Device according to claims 1 or 2, characterized in that disposed between the electrically conductive tube (5) and the electrically non-conductive tube (6) is an additional ferrule (11a) which has two regions connected to one another, a closed and a slotted region, and which coaxially encloses the electrically conductive tube (5).

6. Device according to claim 5, characterized in that the additional ferrule (11a) is conveyed with its closed region up to the rear end face of the flange (26b).

7. Device for altering the direction of a protective tubing system for accommodating electric cables in aircraft, having the following features:
- it comprises a connecting element (29), a protective tubing system composed of a plurality of tubes and having an electrically conductive tube (5) and an electrically non-conductive tube (6) associated therewith, a directional tube (25), a metal bush (30) and a clamping element (11), the directional tube (25) being used as a mechanical aid for altering the direction of installation of the protective tubing system accommodated thereby, the directional tube in the form of a metal corrugated tube realizing a flexurally stiff finished state,
- the connecting element (29) comprises a hollow cylindrical screw-on part (1) and a hollow cylindrical supporting body (31), which are arranged coaxially,
characterized in that
- the supporting body (31) has a change of shape representing a defined graduation which is integrally connected to its widened body part having a greater shell diameter and to its tapered body part having a smaller shell diameter,
- one connection end (26) of the directional tube (25) is smooth or smooth and partially slotted so that it takes the form of a smooth or smooth and partially slotted bush (27a) which coaxially surrounds the electrically non-conductive tube (6),
- disposed coaxially on the tapered part of the supporting body (31) is the bush (30) comprising two zones (30a, 30b) which are connected to one another, an axially closed zone (30a) and an axially slotted zone (30b), the latter zone being composed of flexible elements in the form of contact springs which, under mechanical pressure, connect the supporting body (31) and the bush (30) in an electrically conductive manner, and that firmly attached to the free end of the axially closed zone (30a) of the bush (30) is a flange (26b), which is directed towards the change of shape of the supporting body (31) and up to the rear end face of which the electrically conductive tube (5) coaxially enclosing the bush (30) is conveyed,
- the electrically non-conductive tube (6) and the one connection end (26) of the directional tube (25) are disposed at a defined distance from the rear end face of the flange (26b) in the region of the axially closed zone (30a) above the electrically conductive tube (5),
- a further clamping element (11b) in the form of a ferrule, which is conveyed up to the rear end face of the flange (26b) and coaxially encloses the electrically conductive tube (5) as well as the smooth connection end (26) of the directional tube (25), through crimping fixes the electrically conductive tube (5) and the electrically non-conductive tube (6) as well as the one connection end (26) of the directional tube (25) in the region of the axially closed zone (30a) firmly on the bush (30),
- the electrically conductive tube (5) designed as a metal braid encloses the tapered part of the supporting body (31), which is coaxially surrounded by an electrically non-conductive tube (6) designed as a plastic braid,
- the electrically conductive tube (5) and the electrically non-conductive tube (6) and the smooth connection end (26) of the directional tube (25) are fixed by means of the clamping element (11), preferably taut band by means of a turnbuckle, firmly on the tapered part of the supporting body (31).

8. Device according to claim 7, characterized in that the bush (30) and the tapered part of the supporting body (31) are fixed by means of a snap ring (32), with the result that both bodies are captively connected to one another and supported rotatably relative to one another.

## Revendications

1. **Dispositif de changement de direction d'un système de gaine de protection destiné à accueillir des conduites électriques dans des aéronefs, qui présente les caractéristiques suivantes:**
- il se compose d'un élément de connexion (29), d'un système de gaine de protection composé de plusieurs tuyaux, auquel sont adjoints un tuyau électroconducteur (5) et un tuyau non conducteur (6), d'un tuyau directionnel (25) et d'un élément de serrage (11), le tuyau directionnel (25) servant de moyen auxiliaire mécanique destiné à la pose pouvant changer de direction du système de gaine de protection accueilli par celui-ci, qui comme tuyau ondulé métallique réalise une position finale résistante à la flexion,
- l'élément de connexion (29) se compose d'un élément à filet extérieur (1) cylindrique creux et d'un corps d'appui (31) cylindrique creux, qui sont disposés coaxialement,
**caractérisé en ce que,**
- le corps d'appui (31) présente une déformation qui représente une gradation définie, qui est connectée en une pièce à sa partie étendue au diamètre latéral plus grand et à sa partie rétrécie au diamètre latéral plus petit,
- le tuyau électroconducteur (5) conçu comme un treillis métallique entoure la partie rétrécie du corps d'appui (31), lequel est entouré coaxialement par un tuyau non conducteur (6) réalisé comme un treillis plastique,
- une extrémité de connexion (26) du tuyau directionnel (25) est lisse ou lisse et partiellement fendue, si bien qu'elle présente la forme d'une douille (27) lisse ou lisse et partiellement fendue entourant coaxialement le tuyau non conducteur (6),
- le tuyau électroconducteur et le tuyau non conducteur (5, 6) de même que l'extrémité de connexion (26) du tuyau directionnel (25) sont fixés sur la partie rétrécie du corps d'appui (31) par l'intermédiaire de l'élément de serrage (11), préférentiellement la bande de serrage au moyen d'un manchon de serrage.

2. **Dispositif** suivant la revendication 1, **caractérisé en ce que** sur la partie rétrécie du corps d'appui (31) est disposée coaxialement une douille métallique (30), qui se compose de deux zones connectées l'une à l'autre (30a, 30b), une zone fermée axialement (30a) et une zone fendue axialement (30b), ladite zone fendue étant composée d'éléments flexibles conçus comme des ressorts de contact, qui, par pression mécanique connectent électriquement le corps d'appui (31) et la douille (30), et en ce que sur l'extrémité libre de la zone fermée axialement (30a) de la douille (30) est fixée une flasque (26b) procédant à la déformation du corps d'appui (31) jusqu'à ce que, sur la surface frontale arrière de celle-ci, le tuyau électroconducteur et le tuyau non conducteur (5, 6) de même que l'extrémité de connexion (26) du tuyau directionnel (25) qui entourent coaxialement la douille (30), soient guidés et fixés par l'intermédiaire de l'élément de serrage (11).

3. **Dispositif** suivant la revendication 2, **caractérisé en ce que** la douille (30) repose de manière à pouvoir tourner sur la partie rétrécie du corps d'appui (31), un jonc (32) fixant les deux corps l'un à l'autre.

4. **Dispositif** suivant la revendication 2, **caractérisé en ce que** le tuyau électroconducteur et le tuyau non conducteur (5, 6) de même que l'extrémité de connexion (26) du tuyau directionnel (25) sont guidés jusqu'à la surface frontale arrière de la flasque (26b).

5. **Dispositif** suivant la revendication 1 ou 2,
**caractérisé en ce que** entre le tuyau électroconducteur et le tuyau non conducteur (5, 6) est disposée une douille de serrage supplémentaire (1 la), qui présente deux zones connectées l'une à l'autre, une zone fermée et une zone fendue, laquelle douille entoure coaxialement le tuyau électroconducteur (5).

6. **Dispositif** suivant la revendication 5, **caractérisé en ce que** la douille de serrage supplémentaire (1 la) est guidée avec sa zone fermée jusqu'à la surface frontale arrière de la flasque (26b).

7. **Dispositif de changement de direction d'un système de gaine de protection destiné à accueillir des conduites électriques dans des aéronefs, qui présente les caractéristiques suivantes:**
- il se compose d'un élément de connexion (29), d'un système de gaine de protection composé de plusieurs tuyaux, auquel sont adjoints un tuyau électroconducteur (5) et un tuyau non conducteur (6), d'un tuyau directionnel (25), d'une douille métallique (30) et un élément de serrage (11), le tuyau directionnel (25) servant de moyen auxiliaire mécanique destiné à la pose pouvant changer de direction du système de gaine de protection accueilli par celui-ci, qui comme tuyau ondulé métallique réalise une position finale résistante à la flexion,
- l'élément de connexion (29) se compose d'un élément à filet extérieur (1) cylindrique creux et d'un corps d'appui (31) cylindrique creux, qui sont disposés coaxialement,
**caractérisé en ce que,**
- le corps d'appui (31) présente une déformation qui représente une gradation définie, qui est connectée en une pièce à sa partie étendue au diamètre latéral plus grand et à sa partie rétrécie au diamètre latéral plus petit,
- une extrémité de connexion (26) du tuyau directionnel (25) est lisse ou lisse et partiellement fendue, si bien qu'elle présente la forme d'une douille (27a) lisse ou lisse et partiellement fendue entourant coaxialement le tuyau non conducteur (6),
- la douille (30) est disposée sur la partie rétrécie du corps d'appui (31), qui se compose de deux zones connectées l'une à l'autre (30a, 30b), une zone fermée axialement (30a) et une zone fendue axialement (30b), ladite zone fendue étant composée d'éléments flexibles conçus comme des ressorts de contact, qui, par pression mécanique, connectent électriquement le corps d'appui (31) et la douille (30), et en ce que sur l'extrémité libre de la zone fermée axialement (30a) de la douille (30) est fixée une flasque (26b) procédant à la déformation du corps d'appui (31) jusqu'à ce que sur la surface frontale arrière soit guidé le tuyau électroconducteur (5), qui entoure coaxialement la douille (30).
- le tuyau non conducteur (6) et l'extrémité de connexion (26) du tuyau directionnel (25) sont disposés à une distance définie par rapport à la surface frontale arrière de la flasque (26b) à proximité de la zone fermée axialement (30a) au-dessus du tuyau électroconducteur (5),
- un autre élément de serrage (11b) conçu comme une douille de serrage, qui est guidé sur la surface frontale arrière de la flasque (26b) et qui entoure coaxialement le tuyau électroconducteur (5) et l'extrémité de connexion plate (26) du tuyau directionnel (25), fixe par serrage le tuyau électroconducteur et le tuyau non conducteur (5, 6) de même que l'extrémité de connexion (26) du tuyau directionnel (25) à proximité de la zone fermée axialement (30a) sur la douille (30),
- le tuyau électroconducteur (5) conçu comme un treillis métallique entoure la partie rétrécie du corps d'appui (31), lequel est entouré coaxialement par un tuyau non conducteur (6) réalisé comme un treillis plastique,
- le tuyau électroconducteur et le tuyau non conducteur (5, 6) de même que l'extrémité de connexion (26) du tuyau directionnel (25) sont fixés sur la partie rétrécie du corps d'appui (31) par l'intermédiaire de l'élément de serrage (11), préférentiellement la bande de serrage au moyen d'un manchon de serrage.

8. **Dispositif** suivant la revendication 7, **caractérisé en ce que** la douille (30) et la partie rétrécie du corps d'appui (31) sont fixées par un jonc (32), les deux corps étant donc connectés l'un à l'autre de façon inamovible et disposés de manière à pouvoir tourner l'un par rapport à l'autre.
